# EUROPÄISCHE PATENTSCHRIFT

(11) **EP 3 380 261 B1**
(45) Veröffentlichungstag und Bekanntmachung des Hinweises auf die Patenterteilung: **26.02.2020**
(21) Anmeldenummer: 16800972.8
(22) Anmeldetag: 23.11.2016
(51) Int. Cl.: B21J 15/32

(54) **ENDEFFEKTOR FÜR EINE NIETVORRICHTUNG**
END EFFECTOR FOR A RIVETING DEVICE
EFFECTEUR TERMINAL POUR OUTILLAGE DE RIVETAGE

(30) Priorität: 23.11.2015 DE 102015120239; 14.06.2016 DE 102016110914
(43) Veröffentlichungstag der Anmeldung: 03.10.2018
(73) Patentinhaber: Broetje-Automation GmbH, 26180 Rastede (DE)
(72) Erfinder: EUSTERWIEMANN, Christoph, 26121 Oldenburg (DE)
(74) Vertreter: Gottschald Patentanwälte Partnerschaft mbB
(86) Internationale Anmeldenummer: PCT/EP2016/078588
(87) Internationale Veröffentlichungsnummer: WO 2017/089418

(56) Entgegenhaltungen:
- EP-A1- 2 628 565
- EP-A1- 3 031 549
- EP-A1- 3 037 190
- US-A1- 2008 244 888
- US-A1- 2015 273 570

## Beschreibung

Die Erfindung betrifft einen Endeffektor für eine Nietvorrichtung gemäß dem Oberbegriff von Anspruch 1, eine Nietvorrichtung mit einem Endeffektor nach dem Oberbegriff von Anspruch 2 sowie ein Verfahren zum Betreiben einer Nietvorrichtung gemäß Anspruch 15.

Endeffektoren für Nietvorrichtungen zum Einbringen von Nietelementen in Bauteile sind aus dem Stand der Technik in verschiedenen Ausführungsformen bekannt.

Bspw. ist in der DE 10 2005 028 055 A1 eine Nietvorrichtung zum Nieten von Flugzeugstrukturbauteilen beschrieben. Die Nietvorrichtung weist einen Nietspeicher auf, von welchem die Nieten direkt in einen Zwischenspeicher gefördert werden. Der Zwischenspeicher ist rondellartig ausgebildet und weist eine Vielzahl an Greifern auf, in denen die Nietelemente zwischengespeichert werden. Durch Drehen des Zwischenspeichers werden die Nietelemente je nach Bedarf zum Nietfinger gefördert und vom Greifer durch eine Zunge in den Nietfinger gestoßen. Hierbei ist das Nietelement nicht geführt und es kann verkanten und somit nicht sicher oder nicht richtig ausgerichtet vom Nietfinger aufgenommen werden. Wenn dies geschieht, kann eine Unterbrechung des Fertigungsprozesses erforderlich sein, damit das Nietelement von einem Werker manuell aus dem Nietfinger entfernt werden kann.

Zudem weist der in der DE 10 2005 028 055 A1 beschriebene Nietzwischenspeicher verhältnismäßig aufwendig und damit teuer. Er weist eine Vielzahl an beweglichen Teilen auf, so hat bspw. jeder Greifer und damit jeder Speicherplatz für ein Nietelement einen eigenen Antrieb. Schließlich nimmt der Zwischenspeicher aufgrund der Rondellform am Endeffektor der Nietvorrichtung verhältnismäßig viel Bauraum ein.

Weitere Handhabungsvorrichtungen für Nietelemente sind aus der EP 2 628 565 A1, welche die Basis für den Oberbegriff der Ansprüche 1 und 2 bildet, der US 2015/273570 A1, der US 2008/244888 A1, der EP 3 031 549 A1 und der EP 3 037 190 A1 bekannt

Der Erfindung liegt das Problem zugrunde, einen Endeffektor sowie die eine Nietvorrichtung derart auszugestalten und weiterzubilden, dass der Fertigungsprozess robuster wird und eine Vielzahl von unterschiedlichen Nietelementen auf einfache, kostengünstige und platzsparende Art und Weise dem Nietmodul zugeführt werden können.

Gelöst wird diese Aufgabe durch einen Endeffektor mit den Merkmalen von Anspruch 1.

Im Einzelnen wird dazu vorgeschlagen, dass der Endeffektor ein Nietmodul zum Einbringen eines Nietelements in ein Bauteil, eine Nietausgabe zur Ausgabe von Nietelementen aus einem Nietspeicher und einer Handhabungsvorrichtung zum Fördern eines Nietelements von der Nietausgabe zum Nietmodul aufweist.

Die Handhabungsvorrichtung weist vorschlagsgemäß eine Verstellkinematik und daran angeordnet einen Greifer zum Greifen des Nietelements auf, wobei die Verstellkinematik zur Positionierung des mindestens einen Greifers mindestens zwei Verstellachsen aufweist. Hierdurch können Nietelemente dem Nietmodul sicher übergeben werden, da der Bewegungsraum des Greifers zur Übergabe an das Nietmodul durch die mindestens zwei Verstellachsen der Verstellkinematik vergrößert wird.

Zudem wird eine flexiblere Anordnung von Nietausgabe und Nietmodul zueinander ermöglicht, so dass sich insgesamt ein kompakterer Aufbau ergibt. Ferner können die Kosten durch die Verwendung von handelsüblichen Handhabungsvorrichtungen gegenüber den individuell zu fertigendem Zwischenspeichern im zuvor beschriebenen Stand der Technik reduziert werden.

Ferner wird die vorstehende Aufgabe durch eine Nietvorrichtung mit einem Endeffektor mit den Merkmalen von Anspruch 2 gelöst. Auch hier sind die Nietausgabe und/oder die Handhabungsvorrichtung vorzugsweise am Endeffektor angeordnet, zusätzlich oder alternativ können die Nietausgabe und/oder die Handhabungsvorrichtung jedoch auch an der Nietvorrichtung im Übrigen angeordnet sein. Es ergeben sich die gleichen Vorteile wie zuvor in Zusammenhang mit dem Endeffektor beschrieben.

In einer Weiterbildung der Erfindung weist die Verstellkinematik zur Positionierung des mindestens einen Greifers mindestens drei Verstellachsen auf, weiter vorzugsweise weist die Verstellkinematik zur Positionierung des mindestens einen Greifers mindestens vier Verstellachsen auf. Durch weitere Verstellachsen wird eine flexiblere Anordnung von Nietmodul und Nietausgabe zueinander erreicht. Auf diese Weise können Bauräume besser genutzt und insgesamt eine kompaktere Konstruktion erreicht werden.

Weiter vorzugsweise sind die Verstellachsen der Verstellkinematik kinematisch sequentiell und/oder kinematisch parallel angeordnet. Hierdurch lassen sich je nach Ausführungsform und Anordnung von Nietausgabe und Nietmodul kompakte Konstruktionen erreichen.

In einer Weiterbildung der Erfindung wird vorgeschlagen, dass die Nietvorrichtung, insbesondere der Endeffektor, einen, insbesondere aktorlosen, Zwischenspeicher zum Speichern von Nietelementen aufweist. Hierdurch wird ein leichtes, einfaches und nietmodulnahes Zwischenspeichern von Nietelementen ermöglicht.

Es wird ferner gemäß einer weiteren eigenständigen Lehre ein Endeffektor für eine Nietvorrichtung beansprucht, wobei der Endeffektor ein Nietmodul zum Einbringen eines Nietelements in ein Bauteil, eine Nietausgabe zur Ausgabe von Nietelementen aus einem Nietspeicher und einen aktorlosen Zwischenspeicher zum Speichern von Nietelementen aufweist. Hierdurch wird ein kostengünstiger Zwischenspeicher geschaffen, welcher ein leichtes, einfaches und nietmodulnahes Zwischenspeichern von Nietelementen ermöglicht. Dieser Endeffektor kann insbesondere auch ausgebildet sein, ohne eine Handhabungsvorrichtung zum Fördern eines Nietelements von der Nietausgabe zum Nietmodul, wobei die Handhabungsvorrichtung eine Verstellkinematik und daran angeordnet einen Greifer zum Greifen des Nietelements aufweist und insbesondere ohne dass die Verstellkinematik zur Positionierung des Greifers mindestens zwei Verstellachsen aufweist.

Gemäß einer weiteren eigenständige Lehre wird eine Nietvorrichtung mit einem Endeffektor beansprucht, wobei der Endeffektor ein Nietmodul zum Einbringen eines Nietelements in ein Bauteil aufweist, wobei die Nietvorrichtung, insbesondere der Endeffektor, eine Nietausgabe zur Ausgabe von Nietelementen aus einem Nietspeicher aufweist und wobei die Nietvorrichtung, insbesondere der Endeffektor, einen aktorlosen Zwischenspeicher zum Speichern von Nietelementen aufweist. Hierdurch wird ein kostengünstiger Zwischenspeicher geschaffen, welcher ein leichtes, einfaches und nietmodulnahes Zwischenspeichern von Nietelementen ermöglicht. Dieser Endeffektor kann insbesondere auch ausgebildet sein, ohne eine Handhabungsvorrichtung zum Fördern eines Nietelements von der Nietausgabe zum Nietmodul aufweist, wobei die Handhabungsvorrichtung eine Verstellkinematik und daran angeordnet einen Greifer zum Greifen des Nietelements aufweist, und insbesondere ohne, dass die Verstellkinematik zur Positionierung des Greifers mindestens zwei Verstellachsen aufweist.

Vorzugsweise weisen der zuvor genannte Endeffektor bzw. die zuvor genannte Nietvorrichtung jedoch eine Handhabungsvorrichtung, insbesondere mit einer Verstellkinematik zum Fördern eines Nietelements von der Nietausgabe und/oder dem Zwischenspeicher zum Nietmodul und/oder zum Zwischenspeicher auf. Zur bevorzugten Ausgestaltung der Handhabungsvorrichtung wird auf die Beschreibung verwiesen.

Vorzugsweise ist der Zwischenspeicher dazu ausgebildet, Nietelemente unterschiedlichen Typs und/oder unterschiedlicher Größe aufzunehmen.

Die Handhabungseinrichtung kann vorzugsweise den Nietspeicher mit Nietelementen von der Nietausgabe und/oder dem Nietmodul beschicken. Zusätzlich oder alternativ kann das Nietmodul von der Handhabungseinrichtung aus dem Zwischenspeicher mit Nietelementen versorgt werden.

Verfahrensmäßig wird die eingangs genannte Aufgabe durch die Merkmale von Anspruch 15 gelöst.

Dadurch, dass bei einem vorschlagsgemäßen Endeffektor bzw. einer vorschlagsgemäßen Nietvorrichtung der Greifer der Handhabungsvorrichtung ein Nietelement an der Nietausgabe greift und die Handhabungsvorrichtung über eine Verstellung der Verstellkinematik das Nietelement zum Nietmodul fördert und an das Nietmodul übergibt, ergeben sich die gleichen Vorteile, wie zuvor in Zusammenhang mit dem Endeffektor und der Nietvorrichtung beschrieben.

In einer Weiterbildung des Verfahrens nimmt der Greifer das Nietelement an der Nietausgabe und/oder dem Zwischenspeicher lagedefiniert auf und/oder übergibt das Nietelement lagedefiniert an das Nietmodul und/oder den Zwischenspeicher. Hierdurch kann die Prozessqualität weiter gesteigert werden, da der Niet bei der Übergabe nicht verklemmen oder verrutschen kann.

Im Folgenden wird die Erfindung anhand einer lediglich ein Ausführungsbeispiel darstellenden Zeichnung näher erläutert. In der Zeichnung zeigt
- Fig. 1: schematisch einen vorschlagsgemäßen Endeffektor bzw. einen Endeffektor einer vorschlagsgemäßen Nietvorrichtung mit a) einer Verstellkinematik mit zwei Verstellachsen, b) einer Verstellkinematik mit drei Verstellachsen und c) einer Verstellkinematik mit vier Verstellachsen,
- Fig. 2: ein weiteres Ausführungsbeispiel eines vorschlagsgemäßen Endeffektors bzw. eines Endeffektors einer vorschlagsgemäßen Nietvorrichtung in dreidimensionaler Darstellung,
- Fig. 3: den Greifer gemäß dem Ausführungsbeispiel aus Fig. 2 in einer Stellung an einer Nietausgabe,
- Fig. 4: den Greifer gemäß dem Ausführungsbeispiel aus Fig. 2 in einer Stellung am Zwischenspeicher vor dem Einsetzen des Nietelements in den Zwischenspeicher,
- Fig. 5: den Greifer gemäß dem Ausführungsbeispiel aus Fig. 2 in einer Stellung am Nietmodul vor dem Einsetzen des Nietelements in den Nietfinger,
- Fig. 6: den Greifer gemäß dem Ausführungsbeispiel aus Fig. 2 beim Einsetzen des Nietelements in den Nietfinger mit bereits im Nietfinger aufgenommenen Nietelement und
- Fig. 7: den Greifer gemäß dem Ausführungsbeispiel aus Fig. 2 nach dem Loslassen des Nietelements im Nietfinger
- Fig. 8: den Zwischenspeicher neben einer vergrößerten Darstellung einen Ausschnitt des Zwischenspeichers in einer Explosionsdarstellung
- Fig. 9: beispielhaft von einem Greifer der Handhabungsvorrichtung gegriffene Nietelemente.

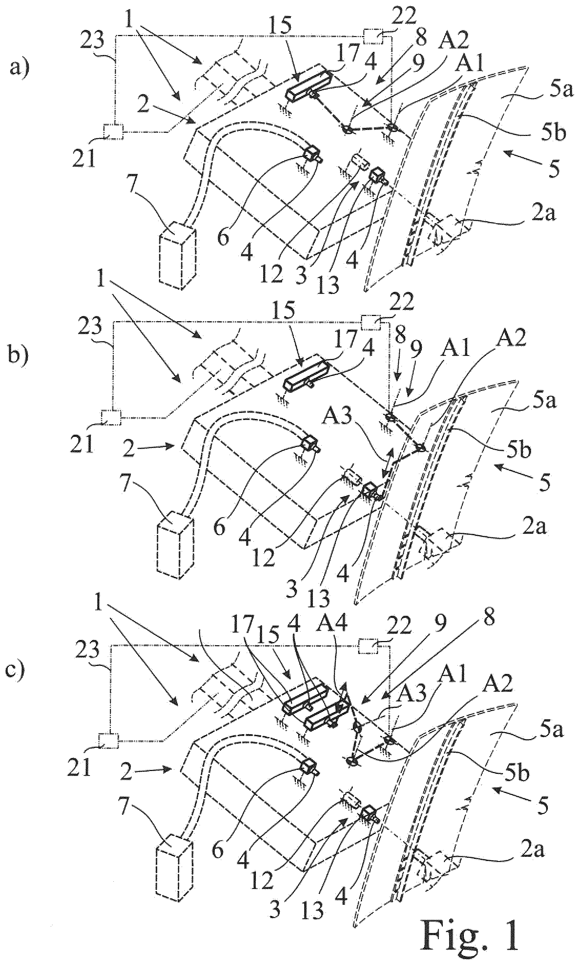

In Fig. 1 ist für eine Nietvorrichtung 1 ein vorschlagsgemäßer Endeffektor 2 gezeigt. Der Endeffektor 2 weist ein Nietmodul 3 zum Einbringen von einem Nietelement 4 in ein Bauteil 5 auf.

Darüber hinaus kann der Endeffektor 2 ein nicht gezeigtes Bohrmodul zum Bohren von Nietlöchern und/oder ein nicht gezeigtes Messmodul zum Messen der gebohrten Löcher aufweisen.

Die Nietvorrichtung 1 weist hier und vorzugsweise einen Roboter auf, welcher den Endeffektor 2 trägt. Besonders bevorzugt ist der Roboter als Portalroboter ausgebildet. Der Endeffektor 2 kann als Bearbeitungswerkzeug insbesondere von einer Nietvorrichtung bzw. Bohrnietvorrichtung im Übrigen, wie diese in der deutschen Gebrauchsmusteranmeldung DE 20 2015 104 273 beschrieben ist, getragen werden. Diesbezüglich wird auf die DE 20 2015 104 273 verwiesen.

Das Bauteil 5 weist hier und vorzugsweise zwei mit einander zu verbindende Teile 5a, 5b aufweisen. Sie bilden hier und vorzugsweise nach dem Vernieten einen Zusammenbau. Hier und vorzugsweise ist das Bauteil 5 bzw. der Zusammenbau ein Flugzeugstrukturbauteil.

Das Einbringen von Nietelementen 4 in Bauteile 5 erfolgt in der Regel in der folgenden Reihenfolge. Das Bauteil 5, bzw. die zu verbindenden Teile 5a, 5b werden zunächst gebohrt und das Bohrloch anschließend vermessen. In Abhängigkeit vom Messergebnis des Bohrlochs wird dann der Typ und/oder die Größe, insbesondere in Durchmesser und Länge, des Nietelements 4 bestimmt, insbesondere mittels eines nicht gezeigten Messmoduls. Hierdurch ergibt sich eine Vielzahl von Nietelementen 4, welche dem Nietmodul 3 in Abhängigkeit vom Messergebnis zugeführt werden müssen.

Meist ist vor dem Bohren nicht bestimmbar, welches Nietelement 4 genau für das zu fertigende Bohrloch benötigt wird. Dies kann erst anhand der tatsächlichen Geometrie des Bohrlochs bestimmt werden. Deshalb müssen verschiedene Nietelemente 4, vorzugsweise in der Nähe des Nietmoduls 3, bevorratet werden. Ist das zu setzende Nietelement 4 nach dem Vermessen bekannt, kann dieses dem Nietmodul 1 zugeführt werden.

Die vorschlagsgemäße Nietvorrichtung 1, hier und vorzugsweise der Endeffektor 2, weist eine Nietausgabe 6 zur Ausgabe von Nietelementen 4 aus einem Nietspeicher 7 auf. Der Nietspeicher 7 kann am Endeffektor 2 und/oder am den Endeffektor 2 tragenden Roboter angeordnet sein. Vorzugsweise ist er separat von vom Endeffektor 2, insbesondere separat von der Nietvorrichtung 1 angeordnet.

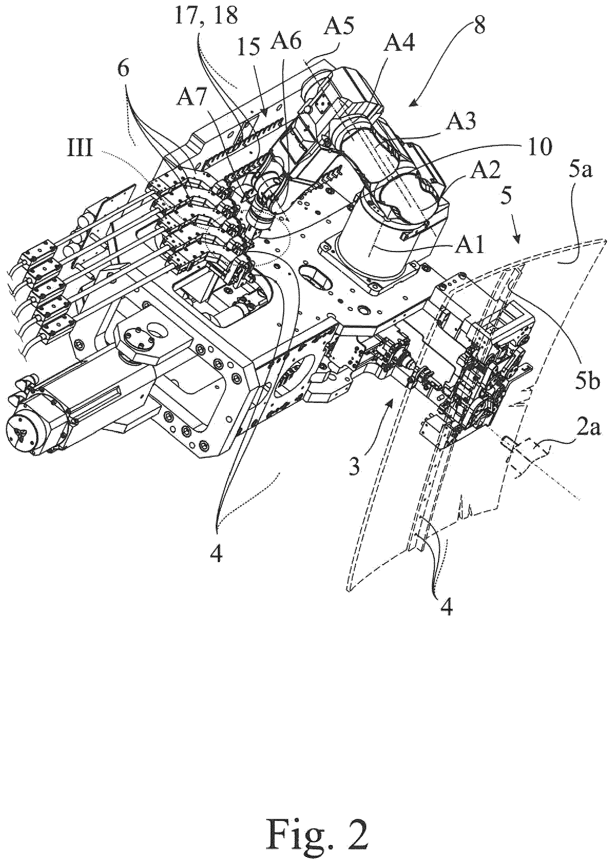

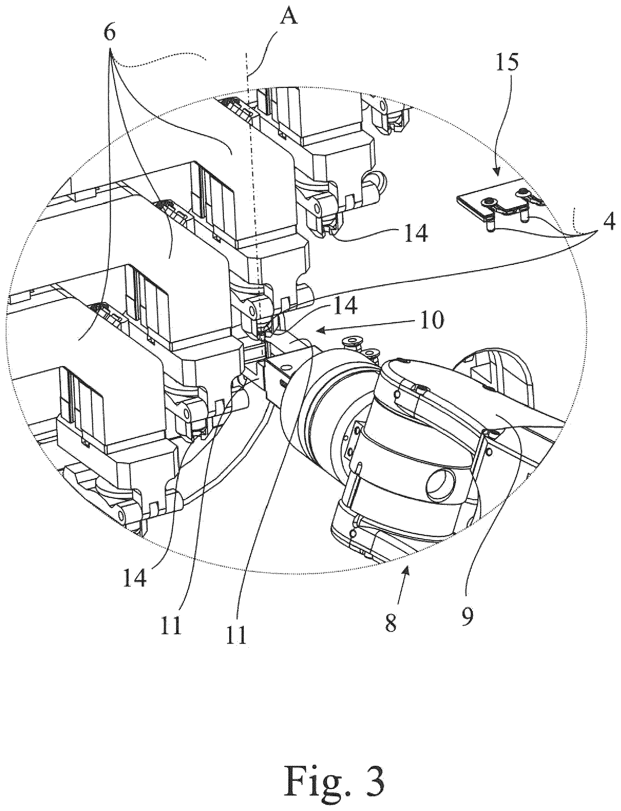

Es können weitere Nietausgaben 6 vorgesehen sein, insbesondere für Nietelemente 4 unterschiedlichen Typs und/oder unterschiedlicher Größe, wie dies in Fig. 2 und 3 gezeigt ist. Vorzugsweise weist die Nietvorrichtung 1 mehrere Zuführungen vom Nietspeicher 7 zu den Nietausgaben 6 auf. Hier und vorzugsweise weist jede Nietausgabe 6 eine eigene Zuführung vom Nietspeicher 7 auf. In den nachfolgenden Ausführungen wird für die Nietausgabe 6 bzw. die Nietausgaben 6 der Singular verwendet, die Ausführungen zu einer Nietausgabe 6 gelten für die weiteren Nietausgaben 6 vorzugsweise jedoch analog.

Die vorschlagsgemäße Nietvorrichtung 1, hier und vorzugsweise der Endeffektor 2, weist eine Handhabungsvorrichtung 8 zum Fördern eines Nietelements 4 von der Nietausgabe 6 zum Nietmodul 3 auf.

Die Handhabungsvorrichtung 8 weist eine Verstellkinematik 9 und daran angeordnet einen Greifer 10 zum Greifen des Nietelements 4 auf. Die Verstellkinematik 9 wiederum weist vorschlagsgemäß zur Positionierung des Greifers 10 mindestens zwei Verstellachsen A1, A2, A3, A4, A5, A6, A7 auf. Hierdurch können die Nietelemente 4 dem Nietmodul 3 sicher übergeben werden. Ein Verkanten oder schiefes Einlegen kann sicher vermieden werden.

Zudem wird eine flexiblere Anordnung von Nietausgabe 6 und Nietmodul 3 zueinander ermöglicht, so dass sich insgesamt ein kompakterer Aufbau ergibt. Ferner können die Kosten durch die Verwendung von handelsüblichen Handhabungsvorrichtungen 8 reduziert werden.

Vorzugsweise ist die Nietausgabe 6 zwar am Endeffektor 2 angeordnet, bei der vorschlagsgemäßen Nietvorrichtung 1 kann die Nietausgabe 6 jedoch auch separat vom Endeffektor 2 an der Nietvorrichtung 1 im Übrigen angeordnet sein.

Dies gilt ebenso für die Handhabungsvorrichtung 8. Die Handhabungsvorrichtung 8 ist bei dem vorschlagsgemäßen Endeffektor 2 zwar an denselben angeordnet, alternativ kann die Handhabungsvorrichtung 8 gemäß der vorschlagsgemäßen Nietvorrichtung 1 jedoch auch separat vom Endeffektor 2 an der Nietvorrichtung 1 im Übrigen angeordnet sein.

Insbesondere können die Nietausgabe 6 und/oder die Handhabungsvorrichtung 8 an dem den Endeffektor 2 tragenden Roboter angeordnet sein.

Die Verstellkinematik 9 zur Positionierung des Greifers 10 weist vorzugsweise nicht nur mindestens zwei Verstellachsen A1, A2, A3, A4, A5, A6, A7 auf, wie es in der Fig. 1a gezeigt ist. Vorzugsweise weist die Verstellkinematik 9 zur Positionierung des Greifers 10 mindestens drei Verstellachsen A1, A2, A3, A4, A5, A6, A7 auf, wie dies in der Fig. 1b gezeigt ist. Weiter vorzugsweise weist die Verstellkinematik 9 zur Positionierung des Greifers 10 mindestens vier Verstellachsen A1, A2, A3, A4, A5, A6, A7 auf, wie dies in der Fig. 1c gezeigt ist. Durch eine Steigerung der Anzahl an Verstellachsen A1, A2, A3, A4, A5, A6, A7 ist ein flexibleres Anordnen der Nietausgabe 6 zum Nietmodul 3 möglich.

Die Verstellachsen A1, A2, A3, A4, A5, A6, A7 der Handhabungsvorrichtung 8 weisen hier und vorzugsweise jeweils ein eigenen Antrieb auf. Auf diese Weise wird eine möglichst flexible Bewegungssteuerung erreicht. Alternativ könne jedoch auch einzelne Verstellachsen A1, A2, A3, A4, A5, A6, A7 indirekt über ein angetriebenes Kraftübertragungselement gemeinsam angetrieben sein.

Vorzugsweise sind die Verstellachsen A1, A2, A3, A4, A5, A6, A7 der Verstellkinematik 9 kinematisch sequentiell und/oder kinematisch parallel angeordnet. Je nach Anordnung der Nietausgabe 6 zum Nietmodul 3 kann eine kinematisch sequentielle und/oder eine kinematisch parallele Anordnung der Verstellachsen A1, A2, A3, A4, A5, A6, A7 einen kompakten Aufbau ermöglichen.

Erfindungsgemäß sind mindestens zwei Verstellachsen A1, A2, A3, A4, A5, A6, A7 der Handhabungsvorrichtung 8 Rotationsachsen.

Im Ausführungsbeispiel der Fig. 1a weist die Handhabungsvorrichtung 8 bspw. zwei Rotationsachsen als Verstellachsen A1, A2 auf. Im Ausführungsbeispiel der Fig. 1b weist die Verstellkinematik 9 zwei Rotationsachsen und eine Linearachse als Verstellachse A1, A2, A3 auf. Im Ausführungsbeispiel der Fig. 1c weist die Verstellkinematik 9 eine weitere Rotationsachse auf.

Im Ausführungsbeispiel der Fig. 1b und vorzugsweise wird eine als Knickarm-Roboter ausgebildete Handhabungsvorrichtung 8 verwendet. Ein Knickarm-Roboter kann hier und vorzugsweise als vertikaler Knickarm-Roboter und/oder als horizontaler Knickarm-Roboter ausgestaltet sein. Alternativ kann die Handhabungsvorrichtung 8 jedoch als Industrieroboter ausgebildet sein. Dies ist im Ausführungsbeispiel der Fig. 2 bis 7 gezeigt.

Zur weiteren Steigerung der Flexibilität der Handhabungsvorrichtung 8 kann die Verstellkinematik 9 zur Positionierung des Greifers 10 mindestens fünf, vorzugsweise mindestens sechs, weiter vorzugsweise mindestens sieben, Verstellachsen A1, A2, A3, A4, A5, A6, A7 aufweisen. Bei einer solchen Ausführungsform hat sich eine Ausbildung der Handhabungsvorrichtung 8 als Industrieroboter besonders bewährt. Im Ausführungsbeispiel der Fig. 2 bis 7 findet bspw. ein Industrieroboter mit sieben Verstellachsen Anwendung.

Zum Greifen der Nietelemente 4 weist der Greifer 10 hier und vorzugsweise mindestens zwei Greiffinger 11 auf. Beim Fördern hält der Greifer 10 das Nietelement 4 vorzugsweise kraftschlüssig und/oder formschlüssig. Vorzugsweise kann der Greifer 10 Nietelemente 4 unterschiedlichen Typs und/oder unterschiedlicher Größe greifen. Auf diese Weise können mit dem Greifer 10 verschiedene Nietelemente 4 zum Nietmodul 3 gefördert werden. Vorzugsweise greift der Greifer 10 genau ein Nietelement 4. Er ist hier und vorzugsweise nicht zum Fördern mehrere Nietelemente 4 gleichzeitig ausgebildet.

Zusätzlich oder alternativ kann an der Verstellkinematik 9 ein weiterer Greifer 10 angeordnet sein. Vorzugsweise sind die beiden Greifer 10 gegenüberliegend angeordnet und als Einheit drehbar. In diesem Fall kann auf einfache Art und Weise bspw. dem Nietmodul 3 ein Nietelement 4 mit einem Greifer 10 entnommen werden und nach einer Verstellbewegung mit dem weiteren Greifer 10 ein von diesem bereits aufgenommenes Nietelement 4 an das Nietmodul 3 übergeben werden. Zusätzlich können an der Verstellkinematik 9 weitere Greifer 10 angeordnet sein. Diese sind dann bevorzugt magazinartig, insbesondre in der Form eines Rondells angeordnet.

Das Nietmodul 3 weist vorzugsweise ein Nietwerkzeug 12 und mindestens einen Nietfinger 13 auf. Der Nietfinger 13 erstreckt sich hier und vorzugsweise entlang einer geometrischen Längsachse A. Vorzugsweise ist das Nietmodul 3 zum Übernehmen eines Nietelements 4, insbesondere linear, verfahrbar. Es wird vorzugsweise für die Übernahme eines Nietelements 4 von einer Arbeitsstellung, in dem das Nietmodul 3 das Nietelement 4 in das Bauteil 5 einbringt, in eine Übergabestellung zu Übernahme des Nietelements 6 bewegt. Zum Einbringen des Nietelements 6 in das Bauteil 5 bewegt das Nietmodul sich dann vorzugsweise mit dem übergebenen Nietelement 4 wieder in die Arbeitsstellung.

Zusätzlich oder alternativ kann die Nietausgabe 6 einen Stopper 14 zum Stoppen und lagedefinierten Halten eines von einem Nietspeicher 7 zugeführten Nietelements 4 aufweisen. Unter "lagedefiniert" ist vorzugsweise in Position und Ausrichtung bestimmt zu verstehen. Durch den Stopper 14 wird eine lagedefinierte Position des Nietelements 4 in der Nietausgabe 6 bewirkt. Dies erleichtert das Greifen des Nietelements 4 durch den Greifer 10 der Handhabungsvorrichtung 8.

Zusätzlich oder alternativ weist die Nietvorrichtung 1, insbesondere der Endeffektor 2, einen, insbesondere aktorlosen, Zwischenspeicher 15 zum Speichern von Nietelementen 4 auf. Wie im allgemeinen Teil der Beschreibung erläutert, wird auch ein Endeffektor 2 bzw. eine Nietvorrichtung 1 mit einem aktorlosen Zwischenspeicher 15 beansprucht, insbesondere auch ohne oder mit einer anders als beschrieben ausgebildeten Handhabungsvorrichtung.

Der Zwischenspeicher 15 ist hier und vorzugsweise dazu ausgebildet, Nietelemente 4 unterschiedlichen Typs und/oder unterschiedlicher Größe aufzunehmen. Weiter vorzugsweise weist der Zwischenspeicher 15 Speicherplätze 16 für Nietelemente 4 auf. Einige, insbesondere alle, Speicherplätze 16 sind vorzugsweise dazu ausgebildet, Nietelemente 4 unterschiedlichen Typs und/oder unterschiedlicher Größe aufzunehmen. Hierdurch wird die Flexibilität bei der Bestückung des Zwischenspeichers 15 mit Nietelementen 4 gesteigert. Vorzugsweise ist der Zwischenspeicher 15 so ausgebildet, dass die Nietelemente 4 aus jedem Speicherplatz 16 einzeln entnehmbar sind.

Hier und vorzugsweise kann der Zwischenspeicher 15 austauschbar, insbesondere durch eine Klemmverbindung, an der Nietvorrichtung 1, insbesondere dem Endeffektor 2, im Übrigen angeordnet sein. Zusätzlich oder alternativ kann ein bzw. der Zwischenspeicher 15 auch am Roboter der Nietvorrichtung 1 angeordnet sein. Der Zwischenspeicher 15 kann mehrere Zwischenspeicherelemente 17 aufweisen, welche austauschbar, insbesondere durch eine Klemmverbindung an der Nietvorrichtung 1, insbesondere dem Endeffektor 2 und/oder dem Roboter, im Übrigen angeordnet sind. Hierdurch kann die Nietvorrichtung 1 bzw. der Endeffektor 2 je nach Bearbeitungsaufgabe mit unterschiedlich vorbestückten Zwischenspeichern 15 bzw. Zwischenspeicherelementen 17 ausgerüstet werden.

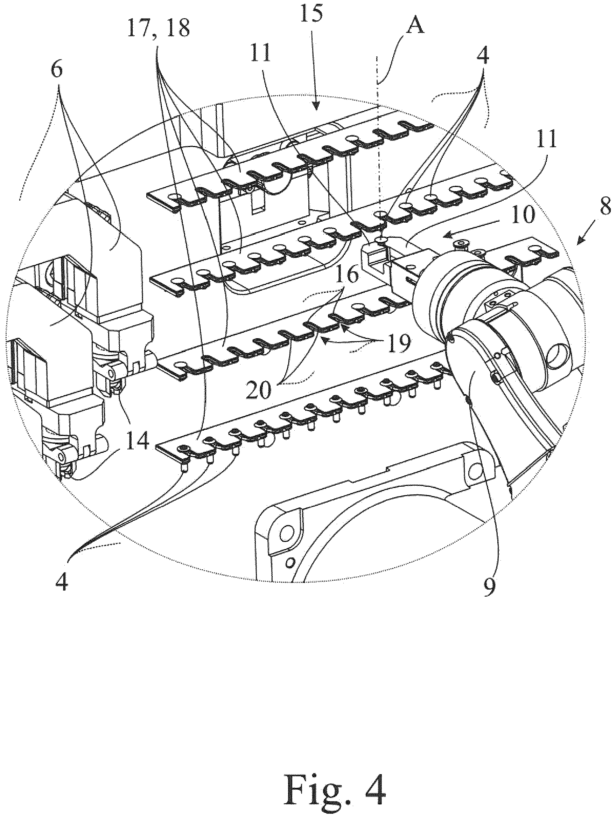

Der Zwischenspeicher 15 kann hier und vorzugsweise eine Rondell- oder Leistenform aufweisen. Vorzugsweise weist der Zwischenspeicher 15, wie in Fig. 4 gezeigt, eine Kammstruktur auf. So kann auf einfache Art und Weise eine größere Anzahl an Nietelementen 4 im Zwischenspeicher 15 vorgehalten werden. Vorzugsweise ist der Zwischenspeicher 15 zur Aufnahme von mindestens 25 Nietelementen 4, weiter vorzugsweise zur Aufnahme von mindestens 50 Nietelementen 4, weiter vorzugsweise von mindestens 75 Nietelementen 4 ausgebildet. Hierdurch wird die Bevorratung einer großen Anzahl an verschiedenen Nietelementen 4 in der Nähe des Nietmoduls 3 ermöglicht.

Zusätzlich oder alternativ kann der Zwischenspeicher 15 mehrere Speicherebenen 18 aufweisen, welche hier und vorzugsweise durch separate Kammstrukturen gebildet werden. Vorzugsweise kann eine Speicherebene 18 durch ein Zwischenspeicherelement 17 gebildet werden.

Vorzugsweise weist der Zwischenspeicher 15 Führungsschlitze 19 auf, in denen die Nietelemente 4 aufgenommen werden. Jeder Führungsschlitz 19 bildet vorzugsweise einen Speicherplatz 16 für ein Nietelement 4. Diese Führungsschlitze 19 ermöglichen vorzugsweise ein lagedefiniertes Halten der Nietelemente 4.

Zusätzlich oder alternativ kann der Zwischenspeicher 15 Federelemente 20, vorzugsweise Spannfederclips, zum Halten der Nietelemente 4 aufweisen. Diese können die im Zwischenspeicher 15 aufgenommenen Nietelemente 4 lagedefiniert halten. Hier und vorzugsweise kann der Führungsschlitz 19 und/oder der Speicherplatz 16, insbesondere das Federelement 20, ein Einlaufmaul aufweisen.

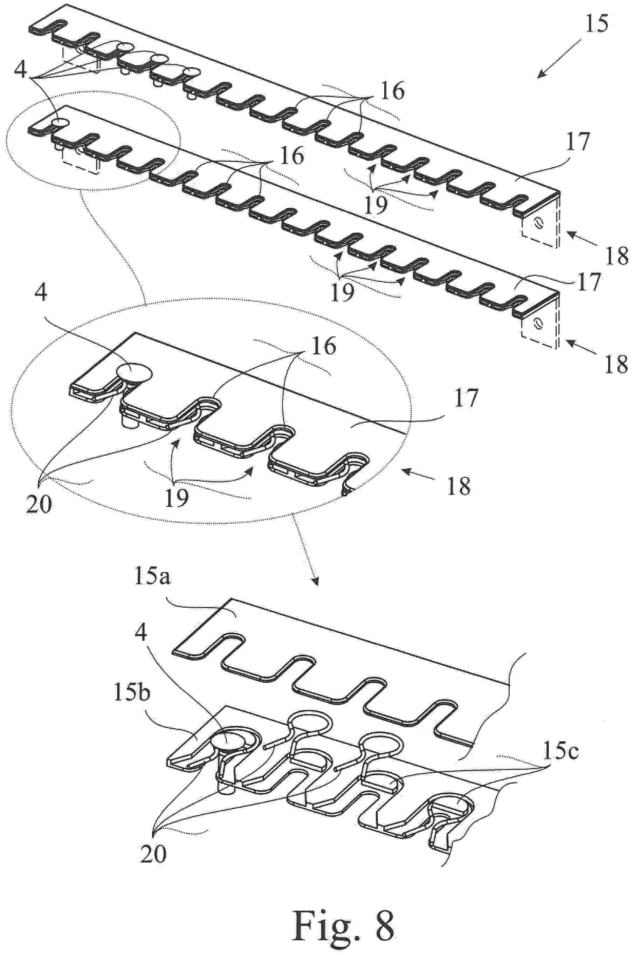

Vorzugsweise klemmt das Federelement 20 das Nietelement 4 beidseitg, wie in der Fig. 8 gezeigt, oder alternativ kann es das Nietelement 4 einseitig klemmen. Die Federelemente, insbesondere die Spannfederclips, weisen vorzugsweise einen im Wesentlichen runden Abschnitt auf, dessen Enden sich weiter vorzugsweise jeweils als Schenkel fortsetzen. Hier und vorzugsweise erstreckt sich der runde Abschnitt über mindestens 180 Grad, weiter vorzugsweise über mindestens 225 Grad, weiter vorzugsweise über mindestens 270 Grad.

Der Zwischenspeicher 15 bzw. ein Zwischenspeicherelement 17 ist vorzugsweise schichtweise aufgebaut, wie dies in der Fig. 8 gezeigt ist. Weiter vorzugsweise ist das Federelement 20 bzw. sind die Federelemente 20 zwischen zwei Schichten 15a, 15b des Zwischenspeichers 15 gehalten, wie dies bspw. in der Explosionszeichnung der Fig. 8 dargestellt ist.

Vorzugsweise ist zumindest eine Schicht 15a als Stanzteil, insbesondere als Stanzblech aufgebildet. Zusätzlich oder alternativ kann zumindest eine Schicht 15b als Frästeil ausgebildet sein.

Zum, insbesondere positionsgenauen, Halten der Federelemente 20 weist vorzugsweise zumindest eine Schicht 15a, 15b eine, insbesondere runde, Haltekontur 15c auf, entlang welcher weiter vorzugsweise das Federelement 20 zumindest abschnittsweise entlangläuft. Die Haltekontur 15c ist vorzugsweise korrespondierend zum runden Abschnitt des Federelements 20 ausgebildet. Die Haltekontur 15c erstreckt sich weiter vorzugsweise über einen geringeren Bogenabschnitt als der runde Abschnitt des Federelements 20.

Gemäß einem bevorzugten Ausführungsbeispiel weist der Roboter und/oder der Endeffektor eine nicht gezeigte Prüfeinheit zur Erfassung von vorbestimmten, für den Bohrprozess und/oder den Nietprozess relevanten Eigenschaften der Nietelemente 4 auf.

Zum Prüfen der Nietelemente 4 kann die Handhabungsvorrichtung 8 die Nietelemente 4 von der Nietausgabe 6 und/oder vom Zwischenspeicher 15 und/oder vom Nietmodul 3 zur Prüfeinheit fördern und für den Bohrprozess und/oder den Nietprozess relevante Eigenschaften der Nietelemente 4 erfassen, insbesondere messen. Die Nietelemente 4 können hier und vorzugsweise Nieten 4a und/oder Nietkollare 4b sein. Vorzugsweise hält der Greifer 10 die Nietelemente 4 während der Erfassung.

Anschließend kann die Nietvorrichtung 1 auf der Basis der erfassten, insbesondere gemessenen, relevanten Eigenschaften der Nietelemente 4 den Bohrprozess und/oder den Nietprozess an das Nietelement 4 anpassen und/oder für eine durchgeführte und ggf. vermessene Bohrung ein zu einer Bohrung passendes Nietelement 4 auswählen.

Hier und vorzugsweise werden mit der Prüfeinheit als vorbestimmte, für den Bohrprozess und/oder den Nietprozess relevante Eigenschaften ein Nietkopfdurchmesser D_{K} und/oder eine Nietkopflänge L_{K} und/oder ein Winkel eines Nietsenkkopfes W und/oder ein Übergangsradius R gemessen und erfasst. Bei einem Übergangsradius R handelt es sich hier und vorzugsweise um einen Radius zwischen zwei Abschnitten eines Nietelements 4, insbesondere zwischen Kopf 4c und Schaft 4d eines Niets. Zusätzlich kann ggf. auch der Schaftdurchmesser D_{S} ermittelt werden. Vorzugsweise wird mit der Prüfeinheit vorzugsweise nur ein Ausschnitt eines Nietelements 4 erfasst bzw. gemessen.

Von besonderer Bedeutung ist insbesondere die Vermessung der Köpfe 4c der Nietelemente 4 und die Anpassung der Bohrung, insbesondere der Senkung an den Kopf 4c des Nietelements 4 bzw. die Auswahl eines Nietelements 4 mit einem passenden Kopf 4c für eine Bohrung, insbesondere die Senkung einer Bohrung.

Insofern erfasst gemäß einer besonders bevorzugten Ausgestaltung die Prüfeinheit beispielsweise als vorbestimmte, für den Bohrprozess und/oder den Nietprozess relevante Eigenschaften der Nietelemente 4 den Nietkopfdurchmesser und/oder die Nietkopflänge vor der Zuführung zum Nietmodul 3 und das Nietmodul 3 nimmt anschließend auf der Basis des Nietkopfdurchmessers und/oder der Nietkopflänge die Bohrung vor, insbesondere die Senktiefe für die Bohrung bestimmt und die Bohrung vornimmt.

Hier und vorzugsweise weist die Prüfeinheit einen optischen Sensor auf. Mit dem optischen Sensor der Prüfeinheit werden vorbestimmte, für den Bohrprozess und/oder den Nietprozess relevante Eigenschaften erfasst. Vorzugsweise erfasst, insbesondere misst, eine Steuerung 21 mittels des optischen Sensors diese Eigenschaften.

Zusätzlich oder alternativ kann die Prüfeinheit eine Beleuchtung zur Messung der vorbestimmten, für den Bohrprozess und/oder den Nietprozess relevanten Eigenschaften aufweisen, welche während der Erfassung das Nietelement 4 beleuchtet. Die Beleuchtung ist hier und vorzugsweise dem Sensor der Prüfeinheit gegenüber angeordnet. Die Beleuchtungsachse und die Blickachse des optischen Sensors sind dabei vorzugsweise koaxial angeordnet. Die Blickrichtung des Sensors und der Beleuchtung sind hier aufeinander zu ausgerichtet.

Im Ausführungsbeispiel ist die Prüfeinheit als beidseitig telezentrisches System ausgebildet. Dies ermöglicht eine genaue Messung ohne eine genaue Positionierung des Nietelements 4 zwischen der Beleuchtung und dem optischen Sensor.

Hier und vorzugsweise ist die Messtoleranz mit der Prüfeinheit unter +/-5 µm, vorzugsweise unter +/- 3 µm, weiter vorzugsweise im Wesentlichen bei +/- 2 µm.

Zusätzlich oder alternativ kann die Nietvorrichtung 1, insbesondere der Endeffektor 2 oder der Roboter, einen nicht gezeigten Sammelbehälter zum Aufnehmen nicht benötigter Nietelemente 4 aufweisen. Vorzugsweise fördert die Handhabungsvorrichtung 8 die Nietelemente 4 von Nietausgabe 6 und/oder dem Zwischenspeicher 15 und/oder dem Nietmodul 3 zu dem Sammelbehälter. Vorzugsweise weist der Sammelbehälter eine Öffnung, insbesondere mit einer Rosette, auf, durch welche der Greifer 10 Nietelemente 4 in den Sammelbehälter einführen kann. Hierdurch können für die nächsten Bearbeitungsschritte nicht mehr benötigte Nietelemente 4 von dem Zwischenspeicher 15 und/oder der Nietausgabe 6 und/oder dem Nietmodul 3 dem Sammelbehälter zugeführt werden. Das Fördern von Nietelementen 4 erfolgt vorzugsweise während des Verfahrens des Endeffektors 2 von einer Bearbeitungsstelle zu einer weiteren Bearbeitungsstelle.

Hier und vorzugsweise weist die Nietvorrichtung 1 eine Steuerung 21, vorzugsweise eine NC-Steuerung auf. Weiter vorzugsweise weist die Handhabungsvorrichtung 8 eine eigene Steuerung 22, insbesondere NC-Steuerung auf, welche über eine Schnittstelle 23 mit der Steuerung der Nietvorrichtung 1 kommuniziert. Auf diese Weise kann einfach und kostengünstig eine am Markt erhältliche Handhabungsvorrichtung 8 für die vorschlagsgemäße Nietvorrichtung 1 bzw. den vorschlagsgemäßen Endeffektor 2 verwendet werden.

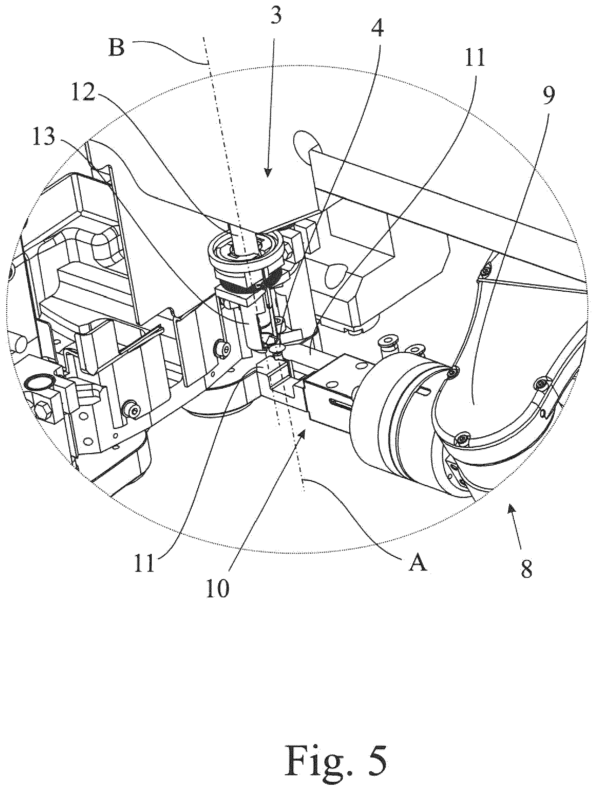

Das Zuführen eines Nietelements 4 zum Nietmodul 3 erfolgt vorzugsweise indem der Greifer 10 der Handhabungsvorrichtung 8 ein Nietelement 4 an der Nietausgabe 6 greift, vgl. Fig. 3. Nach dem Greifen bzw. Aufnehmen des Nietelements 4 durch den Greifer 10 kann die Handhabungsvorrichtung 8 über eine Verstellung der Verstellkinematik 9 das Nietelement 4 zum Nietmodul 3 fördern und an das Nietmodul 3 übergeben, wie dies in den Fig. 5, 6 und 7 gezeigt ist.

Vorzugsweise kann der Greifer 11 jedoch auch nach dem Greifen bzw. Aufnehmen des Nietelements 4 dieses über eine Verstellung der Verstellkinematik 9 zum Zwischenspeicher 15 fördern und an den Zwischenspeicher 15 übergeben. Aus dem Zwischenspeicher 15 kann es dann, wenn es benötigt wird, durch den Greifer 10 der Handhabungsvorrichtung 8 gegriffen und über eine Verstellung der Verstellkinematik 9 zum Nietmodul 3 gefördert und an dieses übergeben werden.

In der Fig. 3 ist das Nietelement 4 lagedefiniert in der Nietausgabe 6 gehalten. Die Nietausgabe 6 wird von dem Handhabungsgerät 8 angefahren und der Greifer 10 greift das Nietelement 4. Hier und vorzugsweise nimmt er das Nietelement 4 lagedefiniert auf.

Danach kann das Handhabungsgerät 8 das aufgenommene Nietelement 4 entweder zum Zwischenspeicher 15 und/oder zum Nietmodul 3 fördern. In der Fig. 4 ist gezeigt, wie das Handhabungsgerät 8 das Nietelement 4 an den Zwischenspeicher 15 übergibt. Dazu bewegt der Greifer 10 das Nietelement 4 in einen Führungsschlitz 19 des Zwischenspeichers 15. Die Übergabe des Nietelements 4 an den Zwischenspeicher 15 erfolgt vorzugsweise lagedefiniert.

Ist das Nietelement 4, insbesondere lagedefiniert, vom Zwischenspeicher 15 aufgenommen, öffnet der Greifer 10 und gibt das Nietelement 10 frei. Der Greifer 10 kann nun einen anderen Speicherplatz 20 des Zwischenspeichers 15 anfahren und ein anderes Nietelement 4 lagedefiniert aufnehmen oder ein weiteres Nietelement 4 aus der Nietausgabe 6 aufnehmen.

Zur Bestückung des Nietmoduls 3 mit einem Nietelement 4 greift der Greifer 10 hier und vorzugsweise ein Nietelement 4 aus der Nietausgabe 6, wie in Fig. 3 gezeigt, oder aus dem Zwischenspeicher 15. Danach fördert die Handhabungsvorrichtung 8 das Nietelement 4 hier und vorzugsweise ein Nietelement 4 aus dem Zwischenspeicher 15 und/oder der Nietausgabe 6 zum Nietmodul 3.

Hier und vorzugsweise übergibt der Greifer 10 das Nietelement 4, insbesondere lagedefiniert, an das Nietmodul 6, insbesondere den Nietfinger 13. Vorzugsweise wird bei der Übergabe vom Greifer 10 die Längsachse des Nietelements 4 koaxial in Übereinstimmung mit der Längsachse des Nietfingers 13 gebracht. Erst danach öffnet hier und vorzugsweise der Greifer 10 um das Nietelement 4 an den Nietfinger 13 zu übergeben.

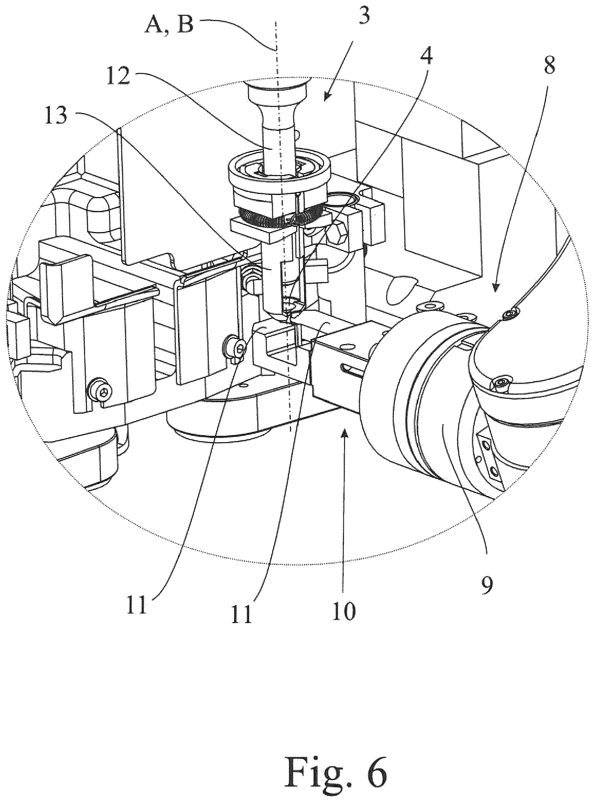

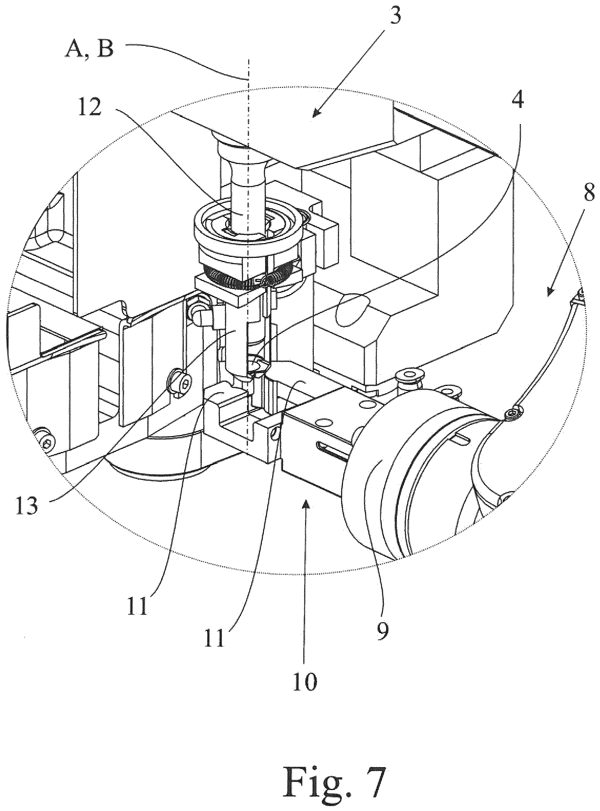

Diese Verfahrensschritte sind in den Fig. 5, 6 und 7 gezeigt. Zunächst ist in der Fig. 5 der Greifer 10 kurz vor dem Nietfinger 13 dargestellt. In der Fig. 6 ist gezeigt, wie die Längsachse B des Nietfingers 13 und die Längsachse A des Nietelements 4 in Übereinstimmung gebracht wurden. Die Fig. 7 zeigt dann, wie der Greifer 10 öffnet und das Nietelement 4 an den Nietfinger 13 übergibt. Hier und vorzugsweise wird danach das Nietmodul 3 in die Arbeitsstellung bewegt und das Nietmodul 3 kann das Nietelement 4 in das Bauteil 5 einbringen.

An dem Endeffektor 2 und/oder der Nietvorrichtung 1, insbesondere dem Roboter, können weitere Handhabungsvorrichtungen 8 zum Fördern eines Nietelements 4 in den zuvor beschriebenen Weisen, insbesondere von der Nietausgabe 6 zum Nietmodul 3, vorgesehen sein. Die vorstehenden Ausführungen zu der Handhabungsvorrichtung 8 gelten für die weiteren Handhabungsvorrichtung 8 analog, so dass diesbezüglich auf die vorstehenden Ausführungen verwiesen wird.

Der Endeffektor 2 und/oder die Nietvorrichtung 1 sind vorzugsweise in der Art ausgebildet und eingerichtet, dass der Endeffektor 2 bzw. die Nietvorrichtung 1 die zuvor beschriebenen Verfahrensschritte durchführen können.

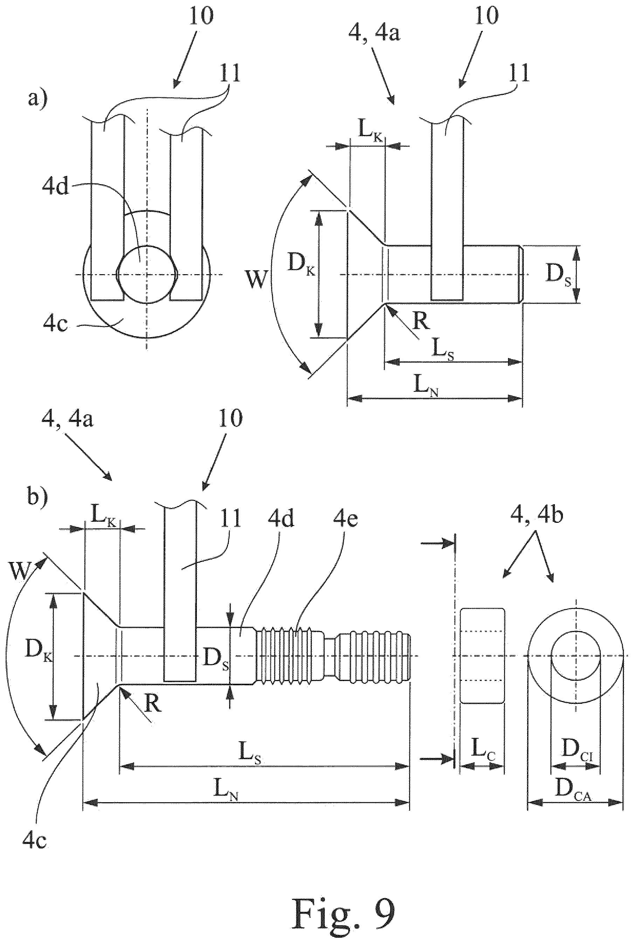

In der Fig. 9 sind schließlich beispielhaft für die Nietelemente in a) ein Vollniet mit Senkkopf, in b) ein Passniet mit Senkkopf und ein zum Passniet korrespondierender Nietkollar gezeigt. Darüber hinaus können auch viele weitere Nietelemente 4 mit der Handhabungsvorrichtung 8 dem Nietmodul 3 zugeführt werden. Dies können insbesondere auch Schraubnieten und/oder Blindniete sein.

Für die in der Fig. 9 gezeigten Nietelemente 4 sind beispielhaft für den Bohrprozess und/oder den Nietprozess mögliche relevante Eigenschaften gezeigt, wobei eine Auswahl aus diesen jeweils von den Anforderungen an die zu erzeugende Nietverbindung abhängen können. Die relevanten Eigenschaften sind hier und vorzugsweise die Nietläng L_{N} und/oder die Schaftlänge L_{S} und/oder die Kopflänge L_{K} und/oder der Kopfdurchmesser D_{K} und/oder der Schaftdurchmesser D_{S} bemaßt. Ferner sind der Senkkopfwinkel W sowie der Übergangsradius R als mögliche für den Bohrprozess und/oder den Nietprozess relevante Eigenschaften eingezeichnet. Darüber hinaus ist eine Nietstruktur, nämlich die Schließrillen 4e des Passniets in Fig. 9b), gezeigt.

Für den Nietkollar 3b sind hier als für den Nietprozess relevante Eigenschaften die Nietkollarlänge L_{C} sowie der Nietkollarinnendurchmesser D_{CI} und der Nietkollaraußendurchmesser D_{CA} gezeigt.

## Patentansprüche

1. Endeffektor für eine Nietvorrichtung (1), wobei der Endeffektor (2) ein Nietmodul (3) zum Einbringen eines Nietelements (4) in ein Bauteil (5), eine Nietausgabe (6) zur Ausgabe von Nietelementen (4) aus einem Nietspeicher (7) und einer Handhabungsvorrichtung (8) zum Fördern eines Nietelements (4) von der Nietausgabe (6) zum Nietmodul (3) aufweist, wobei die Handhabungsvorrichtung (8) eine Verstellkinematik (9) und daran angeordnet einen Greifer (10) zum Greifen des Nietelements (4) aufweist,
wobei die Verstellkinematik (9) zur Positionierung des Greifers (10) mindestens zwei Verstellachsen (A1, A2, A3, A4, A5, A6, A7) aufweist,
**dadurch gekennzeichnet,**
**dass** mindestens zwei der Verstellachsen (A1, A2, A3, A4, A5, A6, A7) Rotationsachsen sind.

2. Nietvorrichtung mit einem Endeffektor (2), wobei der Endeffektor (2) ein Nietmodul (3) zum Einbringen eines Nietelements (4) in ein Bauteil (5) aufweist, wobei die Nietvorrichtung (1), insbesondere der Endeffektor (2), eine Nietausgabe (6) zur Ausgabe von Nietelementen (4) aus einem Nietspeicher (7) aufweist, wobei die Nietvorrichtung (1), insbesondere der Endeffektor (2), eine Handhabungsvorrichtung (8) zum Fördern eines Nietelements (4) von der Nietausgabe (6) zum Nietmodul (3) aufweist, wobei die Handhabungsvorrichtung (8) eine Verstellkinematik (9) und daran angeordnet einen Greifer (10) zum Greifen des Nietelements (4) aufweist,
wobei die Verstellkinematik (9) zur Positionierung des Greifers (10) mindestens zwei Verstellachsen (A1, A2, A3, A4, A5, A6, A7) aufweist,
**dadurch gekennzeichnet,**
**dass** mindestens zwei der Verstellachsen (A1, A2, A3, A4, A5, A6, A7) Rotationsachsen sind.

3. Nietvorrichtung nach Anspruch 2, **dadurch gekennzeichnet, dass** die Nietvorrichtung (1) einen Roboter, insbesondere einen Portalroboter, aufweist, welcher den Endeffektor (2) trägt, vorzugsweise, dass die Handhabungsvorrichtung (8) separat vom Endeffektor (2) an dem den Endeffektor (2) tragenden Roboter angeordnet ist oder dass der Endeffektor (2) die Handhabungsvorrichtung (8) zum Fördern des Nietelements (4) von der Nietausgabe (6) zum Nietmodul (3) aufweist.

4. Endeffektor oder Nietvorrichtung nach einem der vorhergehenden Ansprüche, **dadurch gekennzeichnet, dass** die Verstellkinematik (9) zur Positionierung des mindestens einen Greifers (10) mindestens drei Verstellachsen (A1, A2, A3, A4, A5, A6, A7) aufweist, vorzugsweise, dass die Verstellkinematik (9) zur Positionierung des mindestens einen Greifers (10) mindestens vier Verstellachsen (A1, A2, A3, A4, A5, A6, A7) aufweist.

5. Endeffektor oder Nietvorrichtung nach einem der vorhergehenden Ansprüche, **dadurch gekennzeichnet, dass** die Verstellachsen (A1, A2, A3, A4, A5, A6, A7) der Verstellkinematik (9) kinematisch sequentiell und/oder kinematisch parallel angeordnet sind.

6. Endeffektor oder Nietvorrichtung nach einem der vorhergehenden Ansprüche, **dadurch gekennzeichnet, dass** die Handhabungsvorrichtung (8) als Knickarmroboter und/oder Industrieroboter ausgebildet ist.

7. Endeffektor oder Nietvorrichtung nach einem der vorhergehenden Ansprüche, **dadurch gekennzeichnet, dass** der Greifer (10) mindestens zwei Greiffinger (11) aufweist und Nietelemente (4) unterschiedlichen Typs und/oder unterschiedlicher Größe greifen kann.

8. Endeffektor oder Nietvorrichtung nach einem der vorhergehenden Ansprüche, **dadurch gekennzeichnet, dass** der Greifer (10) das Nietelement (4) beim Fördern des Nietelements (4) kraftschlüssig und/oder formschlüssig hält.

9. Endeffektor oder Nietvorrichtung nach einem der vorhergehenden Ansprüche, **dadurch gekennzeichnet, dass** das Nietmodul (3) ein Nietwerkzeug (12) und mindestens einen Nietfinger (13) aufweist, vorzugsweise dass der Nietfinger (12) sich entlang einer geometrischen Längsachse erstreckt, entlang welcher das Nietelement (4) in das Bauteil (5) eingebracht wird.

10. Endeffektor oder Nietvorrichtung nach einem der vorhergehenden Ansprüche, **dadurch gekennzeichnet, dass** die Nietausgabe (6) einen Stopper (14) zum Stoppen und lagedefinierten Halten eines von einem Nietspeicher zugeführten Nietelements aufweist.

11. Endeffektor oder Nietvorrichtung nach einem der vorhergehenden Ansprüche, **dadurch gekennzeichnet, dass** der Endeffektor (2), einen, insbesondere aktorlosen, Zwischenspeicher (15) zum Speichern von Nietelementen (4) aufweist, vorzugsweise, dass der Zwischenspeicher (15) dazu ausgebildet ist, Nietelemente (4) unterschiedlichen Typs und/oder unterschiedlicher Größe aufzunehmen.

12. Nietvorrichtung nach einem der Ansprüche 2 bis 11, **dadurch gekennzeichnet, dass** die Nietvorrichtung (1) einen, insbesondere aktorlosen, Zwischenspeicher (15) zum Speichern von Nietelementen (4) aufweist, vorzugsweise, dass der Zwischenspeicher (15) dazu ausgebildet ist, Nietelemente (4) unterschiedlichen Typs und/oder unterschiedlicher Größe aufzunehmen

13. Endeffektor oder Nietvorrichtung nach Anspruch 11 oder 12, **dadurch gekennzeichnet, dass** der Zwischenspeicher (15) Federelemente (21), insbesondere Spannfederclips, aufweist, welche die im Zwischenspeicher (15) aufgenommenen Nietelemente (4) lagedefiniert halten.

14. Nietvorrichtung nach einem der Ansprüche 2 bis 13, **dadurch gekennzeichnet, dass** die Nietvorrichtung (1) eine Steuerung (22), vorzugsweise eine NC-Steuerung aufweist, vorzugsweise, dass die Handhabungsvorrichtung eine eigene Steuerung (23), insbesondere NC- Steuerung, aufweist, welche über eine Schnittstelle (24) mit der Steuerung (22) der Nietvorrichtung (1) kommuniziert.

15. Verfahren zum Betreiben einer Nietvorrichtung (1) nach einem der Ansprüche 2 bis 14, wobei der Greifer (10) der Handhabungsvorrichtung (8) ein Nietelement (4) an der Nietausgabe (6) greift und die Handhabungsvorrichtung (8) über eine Verstellung der Verstellkinematik (9) das Nietelement (4) zum Nietmodul (3) fördert und an das Nietmodul (3) übergibt.

16. Verfahren nach Anspruch 15, **dadurch gekennzeichnet, dass** der Greifer (10) das Nietelement (4) an der Nietausgabe (6) und/oder dem Zwischenspeicher (15) lagedefiniert aufnimmt und/oder dass der Greifer (10) das Nietelement (4) lagedefiniert an das Nietmodul (3) und/oder den Zwischenspeicher (15) übergibt, vorzugsweise, dass der Greifer (10) das Nietelement (4) bei der Übergabe erst freigibt, wenn sich das Nietelement (4) in der Längsachse des Nietfingers (13) befindet und/oder in einer Halteposition des Zwischenspeichers (15) befindet.

## Claims

1. End effector for a riveting device (1), wherein the end effector (2) has a riveting module (3) for introducing a rivet element (4) into a component (5), a rivet output (6) for dispensing rivet elements (4) from a rivet store (7), and a handling device (8) for conveying a rivet element (4) from the rivet output (6) to the riveting module (3), wherein the handling device (8) has adjusting kinematics (9) and, arranged thereon, a gripper (10) for gripping the rivet element (4), wherein the adjusting kinematics (9) have at least two adjustment axes (A1, A2, A3, A4, A5, A6, A7) for positioning the gripper (10),
**characterized**
**in that** at least two of the adjustment axes (A1, A2, A3, A4, A5, A6, A7) are axes of rotation.

2. Riveting device having an end effector (2), wherein the end effector (2) has a riveting module (3) for introducing a rivet element (4) into a component (5),
wherein the riveting device (1), in particular the end effector (2), has a rivet output (6) for dispensing rivet elements (4) from a rivet store (7),
wherein the riveting device (1), in particular the end effector (2), has a handling device (8) for conveying a rivet element (4) from the rivet output (6) to the riveting module (3), wherein the handling device (8) has adjusting kinematics (9) and, arranged thereon, a gripper (10) for gripping the rivet element (4), wherein the adjusting kinematics (9) have at least two adjustment axes (A1, A2, A3, A4, A5, A6, A7) for positioning the gripper (10),
**characterized**
**in that** at least two of the adjustment axes (A1, A2, A3, A4, A5, A6, A7) are axes of rotation.

3. Riveting device according to Claim 2, **characterized in that** the riveting device (1) has a robot, in particular a gantry robot, which carries the end effector (2), preferably **in that** the handling device (8) is arranged separately from the end effector (2) on the robot carrying the end effector (2), or **in that** the end effector (2) has the handling device (8) for conveying the rivet element (4) from the rivet output (6) to the riveting module (3).

4. End effector or riveting device according to one of the preceding claims, **characterized in that** the adjusting kinematics (9) have at least three adjustment axes (A1, A2, A3, A4, A5, A6, A7) for positioning the at least one gripper (10), preferably **in that** the adjusting kinematics (9) have at least four adjustment axes (A1, A2, A3, A4, A5, A6, A7) for positioning the at least one gripper (10).

5. End effector or riveting device according to one of the preceding claims, **characterized in that** the adjustment axes (A1, A2, A3, A4, A5, A6, A7) of the adjusting kinematics (9) are arranged kinematically in series and/or kinematically in parallel.

6. End effector or riveting device according to one of the preceding claims, **characterized in that** the handling device (8) is in the form of an articulated robot and/or industrial robot.

7. End effector or riveting device according to one of the preceding claims, **characterized in that** the gripper (10) has at least two gripping fingers (11) and can grip rivet elements (4) of different types and/or of different sizes.

8. End effector or riveting device according to one of the preceding claims, **characterized in that** the gripper (10) holds the rivet element (4) in a force-fitting and/or form-fitting manner while conveying the rivet element (4).

9. End effector or riveting device according to one of the preceding claims, **characterized in that** the riveting module (3) has a riveting tool (12) and at least one riveting finger (13), preferably **in that** the riveting finger (12) extends along a geometric longitudinal axis, along which the rivet element (4) is introduced into the component (5).

10. End effector or riveting device according to one of the preceding claims, **characterized in that** the rivet output (6) has a stopper (14) for stopping a rivet element fed from a rivet store and for holding it in a defined position.

11. End effector or riveting device according to one of the preceding claims, **characterized in that** the end effector (2) has an, in particular actuator-free, intermediate store (15) for storing rivet elements (4), preferably **in that** the intermediate store (15) is configured to hold rivet elements (4) of different types and/or of different sizes.

12. Riveting device according to one of Claims 2 to 11, **characterized in that** the riveting device (1) has an, in particular actuator-free, intermediate store (15) for storing rivet elements (4), preferably **in that** the intermediate store (15) is configured to hold rivet elements (4) of different types and/or of different sizes.

13. End effector or riveting device according to Claim 11 or 12, **characterized in that** the intermediate store (15) has spring elements (21), in particular tension spring clips, which keep the rivet elements (4) held in the intermediate store (15) in a defined position.

14. Riveting device according to one of Claims 2 to 13, **characterized in that** the riveting device (1) has a controller (22), preferably an NC controller, preferably **in that** the handling device has a separate controller (23), in particular an NC controller, which communicates with the controller (22) of the riveting device (1) via an interface (24).

15. Method for operating a riveting device (1) according to one of Claims 2 to 14, wherein the gripper (10) of the handling device (8) grips a rivet element (4) at the rivet output (6) and, by adjustment of the adjusting kinematics (9), the handling device (8) conveys the rivet element (4) to the riveting module (3) and transfers it to the riveting module (3).

16. Method according to Claim 15, **characterized in that** the gripper (10) receives the rivet element (4) at the rivet output (6) and/or the intermediate store (15) in a defined position, and/or **in that** the gripper (10) transfers the rivet element (4) in a defined position to the riveting module (3) and/or the intermediate store (15), preferably **in that** the gripper (10) releases the rivet element (4) during transfer only when the rivet element (4) is located on the longitudinal axis of the riveting finger (13) and/or is in a holding position of the intermediate store (15).

## Revendications

1. Effecteur terminal destiné à un dispositif de rivetage (1), l'effecteur terminal (2) comportant un module de rivetage (3) destiné à introduire un élément de rivetage (4) dans un composant (5), un distributeur de rivetage (6) destiné à distribuer des éléments de rivetage (4) à partir d'un magasin de rivetage (7) et un dispositif de manipulation (8) destiné à transporter un élément de rivetage (4) du distributeur de rivetage (6) au module de rivetage (3), le dispositif de manutention (8) comportant une cinématique de réglage (9) et un moyen de préhension (10) disposé au niveau de celle-ci et destiné à saisir l'élément de rivetage (4), la cinématique de réglage (9) comportant au moins deux axes de réglage (A1, A2, A3, A4, A5, A6, A7) pour positionner le moyen de préhension (10),
**caractérisé en ce que**
au moins deux des axes de réglage (A1, A2, A3, A4, A5, A6, A7) sont des axes de rotation.

2. Dispositif de rivetage comprenant un effecteur terminal (2), l'effecteur terminal (2) comportant un module de rivetage (3) destiné à introduire un élément de rivetage (4) dans un composant (5), le dispositif de rivetage (1), en particulier l'effecteur terminal (2), comportant un distributeur de rivetage (6) destiné à distribuer des éléments de rivetage (4) à partir d'un magasin de rivetage (7), le dispositif de rivetage (1), en particulier l'effecteur terminal (2), comportant un dispositif de manipulation (8) destiné à transporter un élément de rivetage (4) du distributeur de rivetage (6) au module de rivetage (3), le dispositif de manutention (8) comportant une cinématique de réglage (9) et un moyen de préhension (10) disposé au niveau de celle-ci et destiné à saisir l'élément de rivetage (4),
la cinématique de réglage (9) comportant au moins deux axes de réglage (A1, A2, A3, A4, A5, A6, A7)pour positionner le moyen de préhension (10),
**caractérisé en ce que**
au moins deux des axes de réglage (A1, A2, A3, A4, A5, A6, A7) sont des axes de rotation.

3. Dispositif de rivetage selon la revendication 2, **caractérisé en ce que** le dispositif de rivetage (1) comporte un robot, notamment un robot portique, qui porte l'effecteur terminal (2), de préférence **en ce que** le dispositif de manutention (8) est disposé, séparément de l'effecteur terminal (2), sur le robot portant l'effecteur terminal (2) ou **en ce que** l'effecteur terminal (2) comporte le dispositif de manutention (8) destiné à transporter l'élément de rivetage (4) du distributeur de rivetage (6) au module de rivetage (3).

4. Effecteur terminal ou dispositif de rivetage selon l'une des revendications précédentes, **caractérisé en ce que** la cinématique de réglage (9) comporte au moins trois axes de réglage (A1, A2, A3, A4, A5, A6, A7) pour positionner l'au moins un moyen de préhension (10), de préférence **en ce que** la cinématique de réglage (9) pour positionner l'au moins une pince (10) comporte au moins quatre axes de réglage (A1, A2, A3, A4, A5, A6, A7) pour positionner l'au moins un moyen de préhension (10).

5. Effecteur terminal ou dispositif de rivetage selon l'une des revendications précédentes, **caractérisé en ce que** les axes de réglage (A1, A2, A3, A4, A5, A6, A7) de la cinématique de réglage (9) sont disposés cinématiquement de manière séquentielle et/ou cinématiquement en parallèle.

6. Effecteur terminal ou dispositif de rivetage selon l'une des revendications précédentes, **caractérisé en ce que** le dispositif de manutention (8) est conçu comme un robot à bras articulé et/ou un robot industriel.

7. Effecteur terminal ou dispositif de rivetage selon l'une des revendications précédentes, **caractérisé en ce que** le moyen de préhension (10) comporte au moins deux doigts de préhension (11) et peut saisir des éléments de rivetage (4) de types différents et/ou de tailles différentes.

8. Effecteur terminal ou dispositif de rivetage selon l'une des revendications précédentes, **caractérisé en ce que** le moyen de préhension (10) tient l'élément de rivetage (4) pendant le transport de l'élément de rivetage (4) par complémentarité de formes et/ou en force.

9. Effecteur terminal ou dispositif de rivetage selon l'une des revendications précédentes, **caractérisé en ce que** le module de rivetage (3) comporte un outil de rivetage (12) et au moins un doigt de rivetage (13), de préférence **en ce que** le doigt de rivetage (12) s'étend le long d'un axe géométrique longitudinal le long duquel l'élément de rivetage (4) est introduit dans le composant (5).

10. Effecteur terminal ou dispositif de rivetage selon l'une des revendications précédentes, **caractérisé en ce que** le distributeur de rivetage (6) comporte un moyen d'arrêt (14) destiné à arrêter et maintenir un élément de rivetage, amené d'un magasin de rivetage, dans une position définie.

11. Effecteur terminal ou dispositif de rivetage selon l'une des revendications précédentes, **caractérisé en ce que** l'effecteur terminal (2) comporte un accumulateur intermédiaire (15), en particulier sans actionneur, destiné à stocker des éléments de rivetage (4), de préférence **en ce que** l'accumulateur intermédiaire (15) est conçu pour recevoir des éléments de rivetage (4) de différents types et/ou de différentes tailles.

12. Dispositif de rivetage selon l'une des revendications 2 à 11, **caractérisé en ce que** le dispositif de rivetage (1) comporte un accumulateur intermédiaire (15), notamment sans actionneur, destiné à stocker des éléments de rivetage (4), de préférence **en ce que** l'accumulateur intermédiaire (15) est conçu pour recevoir des éléments de rivetage (4) de différents types et/ou de différentes tailles.

13. Effecteur terminal ou dispositif de rivetage selon la revendication 11 ou 12, **caractérisé en ce que** l'accumulateur intermédiaire (15) comporte des éléments à ressort (21), en particulier des clips à ressort de serrage, qui maintiennent les éléments de rivetage (4), reçus dans l'accumulateur intermédiaire (15), dans une position définie.

14. Dispositif de rivetage selon l'une des revendications 2 à 13, **caractérisé en ce que** le dispositif de rivetage (1) comporte une commande (22), de préférence une commande numérique, de préférence **en ce que** le dispositif de manutention comporte sa propre commande (23), notamment commande numérique, qui communique avec la commande (22) du dispositif de rivetage (1) par le biais d'une interface (24).

15. Procédé de fonctionnement d'un dispositif de rivetage (1) selon l'une des revendications 2 à 14, dans lequel le moyen de préhension (10) du dispositif de manutention (8) saisit un élément de rivetage (4) au niveau du distributeur de rivetage (6) et le dispositif de manutention (8) transporte l'élément de rivetage (4) au module de rivetage (3) par réglage de la cinématique de réglage (9) et le transfère au module de rivetage (3) .

16. Procédé selon la revendication 15, **caractérisé en ce que** le moyen de préhension (10) reçoit l'élément de rivetage (4) au niveau du distributeur de rivetage (6) et/ou de l'accumulateur intermédiaire (15) dans une position définie et/ou **en ce que** le moyen de préhension (10) transfère l'élément de rivetage (4) au module de rivetage (3) et/ou à l'accumulateur intermédiaire (15) dans une position définie, de préférence **en ce que** le moyen de préhension (10) ne libère l'élément de rivetage (4) lors du transfert que lorsque l'élément de rivetage (4) est dans l'axe longitudinal du doigt de rivetage (13) et/ou dans une position de maintien de l'accumulateur intermédiaire (15).
